# EUROPÄISCHE PATENTSCHRIFT

(11) **EP 2 965 049 B1**
(45) Veröffentlichungstag und Bekanntmachung des Hinweises auf die Patenterteilung: **23.08.2017**
(21) Anmeldenummer: 14812520.6
(22) Anmeldetag: 16.12.2014
(51) Int. Cl.: G01F 23/28

(54) **VERFAHREN ZUR FÜLLSTANDSÜBERWACHUNG IN EINEM SAMMELRAUM SOWIE ÜBERWACHUNGSANORDNUNG**
METHOD AND APPARATUS FOR MONITORING THE FLUID LEVEL IN A COLLECTOR
PROCÉDÉ PERMETTANT LA SURVEILLANCE D'UN NIVEAU DE REMPLISSAGE DANS UN COMPARTIMENT COLLECTEUR ET ENSEMBLE DE SURVEILLANCE

(30) Priorität: 16.12.2013 DE 102013114123
(43) Veröffentlichungstag der Anmeldung: 13.01.2016
(73) Patentinhaber: Beko Technologies GmbH, 41468 Neuss (DE)
(72) Erfinder: SCHLENSKER, Herbert, 51381 Leverkusen (DE)
(74) Vertreter: Patentanwälte Bauer Vorberg Kayser
(86) Internationale Anmeldenummer: PCT/EP2014/077934
(87) Internationale Veröffentlichungsnummer: WO 2015/091460

(56) Entgegenhaltungen:
- WO-A2-2008/073718
- DE-A1-102012 100 936
- US-A1- 2012 053 863

## Beschreibung

Die Erfindung betrifft ein Verfahren zur elektronischen Überwachung des Füllstandes einer Flüssigkeit in einem Sammelraum, insbesondere eines Kondensats in einem Druckgassystem gemäß den Merkmalen im Oberbegriff von Patentanspruch 1 sowie eine Überwachungsanordnung zur elektronischen Überwachung des Füllstandes einer Flüssigkeit in einem Sammelraum gemäß den Merkmalen im Oberbegriff von Patentanspruch 8.

Der Ausfall von Wasser aus atmosphärischer Luft ist gemeinhin bekannt. Ursächlich hierfür sind bestimmte Temperatur- und Druckbedingungen, unter denen das in der Luft als Dampf gelöste Wasser kondensiert. Demgegenüber fällt bei der Verdichtung atmosphärischer Luft regelmäßig Kondensat an, weil verdichtete Luft nur wenig Wasser aufnehmen kann. Da sich so insbesondere in Druckgassystemen wie beispielsweise in Druckluftsystemen mit der Zeit eine immer größer werdende Menge an Kondensat abscheidet und ansammelt, bedarf es dessen Ableitung.

Hierzu weisen derartige Systeme zumeist einen Kondensatableiter auf. Dieser umfasst eine manuell zu betätigende oder automatisch geregelte Ventilanordnung, über welche das Kondensat aus dem System ausgeleitet werden kann. Übliche Ansteuerungen weisen daher beispielsweise ein mechanisch schwimmergesteuertes Ventil oder gar ein Handventil auf. Weitere Ausgestaltungen sehen beispielsweise ein zeitgesteuertes Magnetventil vor. Die zuverlässige Funktion derartiger Anordnungen ist unter Umständen nicht dauerhaft gewährleistet. Neben den mitunter hohen Instandhaltungskosten kommen zudem etwaige Energieverluste hinzu, welche während der Ableitung des Kondensats aus dem Druckgassystem entstehen können.

Weiterhin haben sich elektronische Kondensatableiter etabliert, welche einen selbsttätigen niveaugesteuerten Betrieb ermöglichen. Deren Ausgestaltung ist insbesondere im Zusammenhang mit der energieverlustarmen Ableitung von Kondensat aus Druckgassystemen zu nennen. Derartige Systeme besitzen wenigstens einen Sensor, welcher im direkten Kontakt zu der anfallenden Flüssigkeit innerhalb des Systems angeordnet ist.

Bereits mit der DE 197 14 037 A1 wurde eine Vorrichtung zum Ableiten von Kondensat aus einem Druckgassystem bekannt. Hierzu umfasst die Vorrichtung einen Sammelraum mit einem Auslass. Der Sammelraum ist für die Aufnahme von während des Betriebs des Druckgassystems anfallendem Kondensat ausgebildet, während der Auslass für dessen Ableitung aus dem Sammelraum dient. Innerhalb des Sammelraums ist ein Füllstandsmesser angeordnet, welcher einen elektronischen, vorzugsweise kapazitiven Sensor besitzt. Dabei ist der Sensor so angeordnet, dass durch ein oberes und ein unteres Niveau des Kondensats innerhalb des Sammelraums erkannt werden kann. Um nun eine geregelte Ableitung des Kondensats in Abhängigkeit seines tatsächlichen Anfalls aus dem Sammelraum zu gewährleisten, ist ferner eine Elektronik zur Steuerung einer externen Ventilanordnung vorgesehen. Diese umfasst eine Zeitschaltung, welche zum Öffnen der Ventilanordnung nach Ablauf eines voreingestellten Zeitintervalls vorgesehen ist. Dabei ist die Elektronik so ausgebildet, dass die Zeitschaltung bei geschlossener Ventilanordnung gestartet wird. Sobald das bei geöffneter Ventilanordnung ablaufende Kondensat das untere Niveau unterschreitet, wird das durch den Sensor erzeugte Signal genutzt, um die Ventilanordnung zu schließen und die Zeitschaltung wird neu gestartet, wenn ein oberes Niveau im Sammelraum wieder erreicht wird. Durch die vorgeschlagene Ausgestaltung kommt der eigentliche Kondensatableiter ohne eigenen Sammelraum aus, da er den bereits vorhandenen Sammelraum des Druckgassystems nutzt. Hierdurch wird dessen vereinfachte und somit kostengünstige Ausbildung ermöglicht.

Die DE 43 12 432 A1 beschreibt eine Vorrichtung, welche der Messung von Flüssigkeitsständen sowie -pegeln dient. Diese umfasst einen Behälter, welcher zur Ausbildung als Messzelle zwei unisolierte und zueinander beabstandete Elektroden aufweist. Um eine messtechnische Ermittlung der Flüssigkeitsstände sowie -pegel vornehmen zu können, ist ein niederkonzentrierter Elektrolyt notwendig. Mit anderen Worten ist die vorgeschlagene Vorrichtung für solche Flüssigkeiten geeignet, mit denen in Kombination aus Behälter und Elektroden eine einem Akkumulator vergleichbare galvanische Zelle gebildet werden kann. Auf diese Weise kann die Vorrichtung in einem Relaxationsoszillator derart verwendet werden, dass die von den mit dem Elektrolyten bedeckten Elektroden abhängigen Frequenzen des Relaxationsoszillators zur Messung herangezogen werden können.

Die im Stand der Technik bekannten automatisierten Vorrichtungen sind allesamt so aufgebaut, dass diese entweder eine mechanische oder aber eine elektronische Auslösung zur Ableitung des Kondensats beinhalten. Dabei müssen der jeweilige Sensor oder der Schwimmer mit dem Kondensat selbst in Kontakt stehen. Hierzu ist deren zumindest teilweise Anordnung innerhalb des Druckgassystems erforderlich, beispielsweise innerhalb eines geeigneten Sammelraums für das Kondensat. Um nun die erforderliche Verbindung zu weiteren Bauteilen oder Komponenten herstellen zu können, verlangt deren Anordnung mitunter aufwendig zu dichtende Zugangsöffnungen. Diese sind erforderlich, um beispielsweise eine Mechanik oder aber eine Versorgungs- oder Signalleitung durch diese hindurch zu führen. Da es sich hierbei um regelmäßig unter hohem Druck stehende Systeme handelt, verlangen derartige Bereiche daher konzeptionell aufwendige Ausgestaltungen sowie eine erhöhte Aufmerksamkeit in Bezug auf deren Wartung.

Angesichts möglichst kompakt bauender und in der Fertigung sowie Anordnung einfacher und kostengünstiger elektronischer Systeme zur Kondensatableitung bieten diese in Bezug auf deren Ausgestaltung sowie deren Betrieb daher auch weiterhin noch Raum für Verbesserungen.

Vor diesem Hintergrund liegt der vorliegenden Erfindung die Aufgabe zugrunde, ein Verfahren zur elektronischen Füllstandsüberwachung einer Flüssigkeit in einem Sammelraum sowie eine Überwachungsanordnung zur elektronischen Füllstandsüberwachung einer Flüssigkeit in einem Sammelraum dahingehend zu verbessern, dass diese eine mit einem Minimum an Bauteilen auskommende und dauerhafte sowie leicht nachrüstbare Möglichkeit zur geregelten Ableitung von Kondensat aus einem Druckgassystem ermöglicht.

Die Lösung des verfahrensmäßigen Teils dieser Aufgabe besteht nach der Erfindung in einem Verfahren zur elektronischen Überwachung des Füllstandes einer Flüssigkeit in einem Sammelraum mit den Merkmalen des Anspruchs 1. Der gegenständliche Teil dieser Aufgabe wird im Rahmen der Erfindung durch eine Überwachungsanordnung mit den Merkmalen des Anspruchs 6 gelöst. Vorteilhafte Weiterbildungen der vorgestellten Lösungen sind Gegenstand der jeweiligen Unteransprüche.

Nachfolgend wird das erfindungsgemäße Verfahren zur elektronischen Überwachung des Füllstandes einer Flüssigkeit in einem Sammelraum erläutert. Bei der Flüssigkeit handelt es sich um sämtliche nicht gasförmigen Fluide, insbesondere um Kondensat. Bevorzugt wird das Verfahren bei einem Druckgassystem eingesetzt, um den Füllstand des darin anfallenden Kondensats zu überwachen. Um die Füllstandsüberwachung der Flüssigkeit durchzuführen, werden ein Überwachungsmittel und eine Auswerteeinheit genutzt. Um den jeweiligen Füllstand der Flüssigkeit zu erfassen, wird das Überwachungsmittel im Bereich des Sammelraumes angeordnet.

So kann es sich bei dem Sammelraum beispielsweise um einen als Gefäß ausgebildeten Teil eines Druckgassystems handeln, insbesondere um ein Abscheidegehäuse oder Filtergehäuse. Alternativ kann der Sammelraum auch als zusätzliche Einheit ausgebildet sein, welche beispielsweise an oder in einem Druckgassystem angeordnet ist. Selbstverständlich kann der Sammelraum beispielsweise auch derart mit einem Druckgassystem verbunden sein, dass dieser über eine geeignete Zuleitung fluidleitend an das Druckgassystem gekoppelt ist.

Bei dem im Rahmen der Erfindung genannten Druckgassystem kann es sich beispielsweise um ein Druckluftsystem handeln. Weiterhin sind Überwachungsmittel und Auswerteeinheit so ausgestaltet, dass diese miteinander korrespondieren können, um den jeweiligen Füllstand der Flüssigkeit zu erfassen. Das Überwachungsmittel kann vorteilhafterweise unmittelbar im Filtergehäuse eines Druckgassystems angeordnet sein.

Erfindungsgemäß ist vorgesehen, dass als Überwachungsmittel ein RFID-Transponder verwendet wird. Im Rahmen der Erfindung wird es als alternative Möglichkeit angesehen, dass das Überwachungsmittel wenigstens einen RFID-Transponder umfasst. Dabei ist die Auswerteeinheit dazu ausgebildet, dass durch diese ein zumindest temporäres elektromagnetisches Feld erzeugt wird. Bei dem elektromagnetischen Feld handelt es sich bevorzugt um ein hochfrequentes elektromagnetisches Wechselfeld. Je nach Ausgestaltung kann es sich alternativ hierzu auch um eine niedrigfrequente oder mittelfrequente Induktionsübertragung handeln.

Als temporär wird dabei beispielsweise eine nach einem vorbestimmten Intervall erfolgende Felderzeugung verstanden. Alternativ oder in Kombination hierzu wird unter temporär auch eine unrhythmische Erzeugung des elektromagnetischen Feldes verstanden, welche lediglich bei Bedarf erfolgt. Hierbei kann es sich beispielsweise auch um eine nach dem Zufallsprinzip erfolgende Felderzeugung handeln. Selbstverständlich kann es je nach Ausgestaltung auch vorteilhaft sein, wenn die Erzeugung des elektromagnetischen Feldes über einen längeren Zeitraum hinweg oder aber dauerhaft erfolgt.

Unter dauerhaft wird wenigstens ein solcher Zeitraum verstanden, in welchem beispielsweise ein im Rahmen des erfindungsgemäßen Verfahrens in Bezug auf seinen Flüssigkeitsfüllstand überwachtes Druckgassystem in Betrieb ist.

Nach dem Erfindungsgedanken kann das durch die Auswerteeinheit erzeugte elektromagnetische Feld durch das Überwachungsmittel beeinflusst werden. Die Beeinflussung des elektromagnetischen Feldes erfolgt dabei in Form einer Rückmeldung des Überwachungsmittels. Dabei ist zu betonen, dass die Beeinflussung des elektromagnetischen Felds und somit die Rückmeldung des Überwachungsmittels in einem Maße erfolgt, welches durch die Auswerteeinheit registrierbar ist.

Der besondere Vorteil des erfindungsgemäßen Verfahrens liegt in der Verwendung eines RFID-Transponders entweder als Überwachungsmittel oder in Kombination mit diesem. Da der RFID-Transponder ohne eine physikalische Zuleitung oder Verbindung betrieben werden kann, sind die zur Durchführung des Verfahrens notwendigen Teile im Wesentlichen auf die reine Anordnung des Überwachungsmittels und der Auswerteeinheit beschränkt. Hierdurch ergibt sich ein überaus überschaubarer und mit nur wenig Aufwand realisierbarer Aufbau, da die Korrespondenz zwischen Überwachungsmittel und Auswerteeinheit drahtlos erfolgt.

Der im Rahmen der Erfindung als Überwachungsmittel verwendete RFID-Transponder weist wenigstens eine Antenne sowie einen analogen Schaltkreis auf. Dabei ist der analoge Schaltkreis dazu ausgebildet, um zumindest ein Signal in Form einer Rückmeldung zu senden. Weiterhin ist die Antenne dazu ausgebildet, um dem durch die Auswerteeinheit erzeugten elektromagnetischen Feld ausgesetzt zu werden. Die dabei über die Antenne aufgenommene Energie aus dem elektromagnetischen Feld dient in Form von Hochfrequenzenergie dazu, um den RFID-Transponder mit Energie zu versorgen und somit zu betreiben.

Alternativ zu dem zuvor beschriebenen passiven RFID-Transponder kann auch ein aktiver RFID-Transponder eingesetzt werden. Dieser unterscheidet sich von dem passiven RFID-Transponder dadurch, dass dieser eine eigene Energiequelle besitzt. Deren Vorteil liegt in der zumeist höheren Reichweite sowie einem erweiterten oder erweiterbaren Funktionsumfang. So können derartige RFID-Transponder zusätzliche Aufgaben übernehmen, indem diese beispielsweise einen weiteren Sensor beinhalten. Demgegenüber bieten passive RFID-Transponder geringe Herstellungskosten sowie einen von der Kapazität einer eigenen Energiequelle unabhängigen Dauerbetrieb. Hierzu können passive RFID-Transponder einen Kondensator besitzen, welcher durch die aus dem elektromagnetischen Feld aufgenommene Energie geladen wird. Deren Rückmeldung bei Erzeugung des elektromagnetischen Feldes erfolgt zumeist zeitversetzt, bis der Kondensator einen ausreichenden Ladezustand für die anstehende Rückmeldung an die Auswerteeinheit aufweist.

Weiterhin alternativ kann der verwendete RFID-Transponder ein semi-aktiver RFID-Transponder sein. Dessen Vorteil liegt in einer hohen Sparsamkeit, da er keinen eigenen Sender besitzt. Um nun eine Rückmeldung an die Auswerteeinheit zu liefern, moduliert der semi-aktive RFID-Transponder lediglich seinen Rückstreukoeffizienten auf das elektromagnetische Feld.

Folglich ist die Verwendung des RFID-Transponders als Überwachungsmittel zunächst darauf ausgerichtet, dass dessen Anwesenheit in der Nähe der Auswerteeinheit durch diese erkannt wird. Im Sinne des grundsätzlichen Erfindungsgedankens ist vorgesehen, dass das Überwachungsmittel und die Auswerteeinheit derart zueinander angeordnet sind, dass der jeweilige Füllstand, also der Pegel der Flüssigkeit zwischen dem Überwachungsmittel und der Auswerteeinheit, ansteigen und/oder absinken kann. Mit anderen Worten kann auf diese Weise der Füllstand der Flüssigkeit zwischen dem Überwachungsmittel und der Auswerteeinheit auf und ab pendeln. In diesem Zusammenhang wird genutzt, dass das elektromagnetische Feld durch den zwischen dem Überwachungsmittel und der Auswerteeinheit ansteigenden Füllstand im gleichen Maße zumindest teilweise absorbiert wird.

Hierzu kann der verwendete RFID-Transponder bevorzugt mit sehr hohen Frequenzen (UHF) arbeiten, beispielsweise mit 433 MHz oder aber 850 bis 950 MHz. Insbesondere bei derartigen UHF-Transpondern wird die UHF-Energie sehr stark von Wasser absorbiert, so dass eine überaus zutreffende und sichere Detektion der Anwesenheit von Wasser zwischen dem Überwachungsmittel und der Auswerteeinheit ermöglicht ist.

Insgesamt kann hierdurch ein überaus einfacher Aufbau und somit ein überaus leichter Betrieb des erfindungsgemäßen Verfahrens erfolgen. Dabei macht der Erfindungsgedanke sich die Erkenntnis zunutze, dass Flüssigkeiten - insbesondere Wasser - eine mitunter stark absorbierende Wirkung auf ein elektromagnetisches Feld ausübt. Folglich dient der RFID-Transponder hierbei in erster Linie der reinen Rückmeldung als Reaktion auf das durch die Auswerteeinheit erzeugte elektromagnetische Feld. Dabei wird besagte Rückmeldung in Form einer Beeinflussung des elektromagnetischen Felds im gleichen Maße verändert, wie das elektromagnetische Feld durch den ansteigenden Pegel der Flüssigkeit und somit mit zunehmendem Füllstand absorbiert wird. Aufgrund dieser Veränderung des an sich konstanten elektromagnetischen Felds kann die Auswerteeinheit Rückschlüsse über den aktuellen Füllstand der Flüssigkeit innerhalb des Sammelraumes ziehen.

Mit anderen Worten wird also eine durch die Flüssigkeit erzeugte Störung der Kommunikation zwischen dem Überwachungsmittel und der Auswerteeinheit als nutzbares Signal verwendet. Der RFID-Transponder wird im Prinzip lediglich als Echogeber genutzt, auf den Informationsgehalt bzw. den Inhalt des ausgesendeten Signals komme es dabei nicht an. Es wird sozusagen der Betrag der Dämpfung des Funksignals durch die Flüssigkeit als Indikator genutzt. Dieses Feldrauschen bzw. die Feldstärken-Änderung, die in üblichen Anwendungen als Störgröße empfunden wird und dort meist mit mehr oder weniger umfangeichen Maßnahmen kompensiert wird, ist hier erfindungsgemäß der gewollte und ausgewertete Effekt. Der RFID-Transponder selbst ist sowohl Überwachungsmittel als auch Sensor. Hierzu kann der RFID-Transponder wenigstens einen digitalen Schaltkreis besitzen, welcher der Erfassung wenigstens eines Pegels bezogen auf den Füllstand der Flüssigkeit in dem Sammelraum dient. Weiterhin kann dieser auch so ausgestaltet sein, dass wenigstens zwei oder mehr Pegel erfassbar sind.

In jedem Fall dient der digitale Schaltkreis dann dazu, dass jeweilige Ergebnis der Füllstandsmessung in Form eines Wertes drahtlos an die Auswerteeinheit zu übertragen. Hierzu kann das durch die Auswerteeinheit erzeugte elektromagnetische Feld in Abhängigkeit von dem durch den Sensor erfassten Füllstand derart verändert werden, dass der erfasste Füllstand an die Auswerteeinheit übermittelt wird. Das Überwachungsmittel und die Auswerteeinheit fungieren als Teil einer elektronischen Überwachungsanordnung. Besagte Überwachungsanordnung ist mit einer Ventilanordnung gekoppelt, welche wiederum fluidleitend mit dem Sammelraum verbunden ist. Die Ventilanordnung weist einen geeigneten Antrieb auf oder ist zumindest mit einem solchen gekoppelt, um die Ventilanordnung zum Ablassen von Flüssigkeit zu öffnen und anschließend wieder zu schließen. Bei dem wenigstens einen Ventil der Ventilanordnung kann es sich beispielsweise um ein Drehventil oder aber um ein elektromagnetisches Ventil handeln.

Durch die zuvor beschriebene Anordnung ist es möglich, dass beim Erreichen oder Überschreiten eines oberen Füllstandes der Flüssigkeit innerhalb des Sammelraums die Ventilanordnung geöffnet werden kann, um zumindest einen Teil der Flüssigkeit aus dem Sammelraum abzuleiten. Beim Erreichen oder Unterschreiten eines unteren Füllstandes der Flüssigkeit innerhalb des Sammelraumes kann die Ventilanordnung wieder geschlossen werden kann.

Auf diese Weise kann eine elektronische niveaugesteuerte Regelanordnung geschaffen werden, welche einem geregelten Ablassen von gesammelter Flüssigkeit aus dem Sammelraum heraus dient.

In Bezug auf die zuvor dargestellte Ausgestaltung als elektronische Überwachungsanordnung geschieht im Rahmen der Erfindung das Öffnen oder Schließen der Ventilanordnung auf Basis eines erfassten Füllstandes. In Kombination können das Öffnen und/oder das Schließen der Ventilanordnung auch nach Ablauf eines zuvor festgelegten Zeitintervalls erfolgen. Mit anderen Worten kann die Ventilanordnung beispielsweise durch das erfasste Erreichen oder Überschreiten eines oberen Füllstandes geöffnet werden, um einen Teil der Flüssigkeit aus dem Sammelraum abzulassen. Das anschließende Schließen der Ventilanordnung kann dann nach Ablauf eines festgelegten Zeitintervalls erfolgen. Umgekehrt kann das Schließen der Ventilanordnung durch das erfasste Erreichen oder Unterschreiten eines unteren Füllstandes erfolgen, während das erforderliche Öffnen der Ventilanordnung nach Ablauf eines festgelegten Intervalls nach dem Schließen derselben erfolgt. Selbstverständlich kann das jeweilige Intervall auch an weitere gemessene Parameter geknüpft sein und somit dynamisch verändert werden. Denkbar hierbei wäre beispielsweise eine Messung der Feuchte innerhalb eines Druckgassystems, welche Aufschluss über den möglichen Anfall an Kondensat geben kann.

Grundsätzlich kann das Öffnen und Schließen der Ventilanordnung aber auch jeweils durch das erfasste Erreichen sowie Unter- oder Überschreiten eines Füllstandes gesteuert werden.

So ist gemäß einer weiteren vorteilhaften Weiterentwicklung der Erfindung denkbar, dass das Verfahren mit mindestens zwei Überwachungsmitteln durchgeführt wird. Besagte Überwachungsmittel sind dabei zueinander beabstandet angeordnet, um wenigstens zwei voneinander unterschiedliche Füllstände zu erfassen. Hierzu ist vorgesehen, dass beim Ableiten oder Ansammeln der Flüssigkeit aus oder in dem Sammelraum die Zeit zwischen dem Passieren der beiden Überwachungsmittel durch den abnehmenden oder zunehmenden Füllstand gemessen werden kann. Auf diese Weise lässt sich eine Aussage über das jeweilige Abströmverhalten der Flüssigkeit machen, indem dieses in Bezug auf die Geschwindigkeit des Ablaufs der Flüssigkeit gemessen wird.

Durch das zuvor beschriebene erfindungsgemäße Verfahren ist nunmehr eine überaus voreilhafte Möglichkeit zur elektronischen Füllstandsüberwachung einer Flüssigkeit in einem Sammelraum gegeben, welches mit einem Minimum an Bauteilen auskommt. Insbesondere durch die Verwendung eines RFID-Transponders als Überwachungsmittel ist dank der drahtlosen Korrespondenz zwischen diesem und der Auswerteeinheit eine dauerhafte Möglichkeit zur geregelten Ableitung von Kondensat aus einem Druckgassystem ermöglicht. Überdies wird durch die erfindungsgemäße Ausgestaltung eine vorteilhafte Möglichkeit zum leichten Nachrüsten bereits bestehender Druckgassysteme aufgezeigt, welche quasi minimalinvasiv über eine relativ kleine Öffnung im Sammelbehälter erfolgen kann.

Durch die unmittelbare Anordnung des Überwachungsmittels bzw. des RFID Transponders im Sammelbehälter oder Filtergehäuse kann vorteilhafterweise auch das sogenannte Airlock-Problem gelöst werden. Dieses basiert darauf, dass oftmals vom Sammelbehälter bzw. Filtergehäuse eine Leitung zu einem Kondensatableiter geführt ist, in dem ein Flüssigkeitspegel erfasst und von dem bei zu hohem Flüssigkeitspegel ein Ventil des Sammelbehälters geöffnet wird. Befindet sich in dieser Zuleitung zum Kondensatableiter eine Luftblase, steigt der Flüssigkeitspegel im Kondensatableiter nicht weiter an, so dass dieser das entsprechende Ventil auch nicht freigeben kann. Innerhalb des Sammelbehälters kann die Flüssigkeit dennoch ansteigen, ohne dass dies registriert wird.

Erfindungsgemäß ist deshalb vorgesehen, dass das Überwachungsmittel bzw. der RFID-Transponder unmittelbar im Sammelbehälter oder Filtergehäuse angeordnet ist, so dass die Zuleitung gänzlich entfällt und somit das Airlock-Problem umgangen werden kann.

Alternativ zu der oben beschriebenen vorteilhaften Ausführungsvariante kann das erfindungsgemäße System aber auch weiterhin in einem externen Kondensatableiter angeordnet sein, der, wie aus dem Stand der Technik bekannt, über eine Zuleitung mit dem Sammelbehälter verbunden ist. Dies kann zwar hinsichtlich der Airlock-Problematik nachteilig sein, jedoch können andere Vorteile überwiegen, so dass diese Anordnung trotzdem Einsatz finden kann. In diesem Fall ist sowohl das Überwachungsmittel als auch die Auswerteeinheit extern vom Sammelbehälter in dem Kondensatableiter angeordnet, der über eine Leitung mit dem Sammelbehälter verbunden ist. Steigt der Flüssigkeitspegel zu stark an, wird ein ebenfalls extern angeordnetes Ventil geöffnet, das aus dem Sammelbehälter und auch aus dem Kondensatableiter Flüssigkeit ableitet.

Weiterhin stellt die Erfindung auch eine Überwachungsanordnung zur elektronischen Füllstandüberwachung einer Flüssigkeit in einem Sammelraum vor. Besagte Überwachungsanordnung kann insbesondere zur Durchführung des zuvor aufgezeigten erfindungsgemäßen Verfahrens genutzt werden. Die erfindungsgemäße Überwachungsanordnung wird nachfolgend näher erläutert:
Die erfindungsgemäße Überwachungsanordnung umfasst zunächst wenigstens ein Überwachungsmittel sowie eine Auswerteeinheit. Dabei ist das Überwachungsmittel dafür vorgesehen, um bevorzugt im Bereich des Sammelraumes insbesondere in einem Filtergehäuse angeordnet zu werden. Erfindungsgemäß ist das Überwachungsmittel selbst ein RFID-Transponder oder umfasst zumindest einen solchen. Weiterhin ist die Auswerteeinheit dazu ausgebildet, um ein drahtlos übermitteltes Signal des Überwachungsmittels zu empfangen.

Das Überwachungsmittel bzw. der RFID-Transponder ist an einem freien Ende eines Stabes angeordnet bzw. selbst stabförmig ausgeführt. Ist der RFID Transponder an einem Stab angeordnet, dient der Stab sozusagen als Haltevorrichtung für den RFID-Transponder. Die stabförmige Ausführung hat den wesentlichen Vorteil, dass der Durchmesser der Haltevorrichtung mit dem RFID-Transponder äußerst gering ist und somit in kleinste Öffnungen des Sammelbehälters eingeführt werden kann, was eine Anordnung des Überwachungsmittels (RFID-Transponders) innerhalb des Sammelbehälters erleichtert. Der Sammelbehälter weist eine solche Öffnung beispielsweise ohnehin zum Ableiten der Flüssigkeit auf, sodass keine zusätzliche Öffnung eingebracht werden muss. Erfindungsgemäß kann aber trotzdem auch das Einbringen einer zweiten Öffnung denkbar sein, wenn dies aus geometrischen Gründen vorteilhaft sein sollte. Ein geeigneter RFID-Transponder hat beispielsweise ein Durchmesser von etwa 2 bis 5 mm, vorzugsweise etwa 2,5 mm und ist 10 mm bis etwa 30 mm lang, vorzugsweise etwa 12 mm. Selbstverständlich sind auch andere Abmessungen denkbar.
Das Einführen des Stabes mit dem Überwachungsmittel ist somit auch bei Anschlussquerschnitten von 1/8 Zoll bis ¾ Zoll möglich, insbesondere können die üblichen Öffnungen mit einem Durchmesser von ¼ Zoll genutzt werden.
Der Abstand des Überwachungsmittels von der Auswerteeinheit, die sich auf der gegenüberliegenden Seite an den Stab anschließen kann, beträgt vorzugsweise 5 cm, denkbar sind aber auch Abstände von bis zu 20 cm. Dies ist letztendlich von der Sende-/Empfangsleistung des Systems abhängig und kann insbesondere zukünftig auch variieren.

Bei der erfindungsgemäßen stabförmigen Ausführungsvariante ist die Auswerteeinheit außerhalb des Sammelbehälters angeordnet, was hinsichtlich der Ernergieversorgung insbesondere dann deutlich einfacher ist, wenn das Überwachungsmittel passiv ausgeführt ist und keinerlei Energieversorgung benötigt. Alternativ kann aber auch eine Ausführungsvariante gewählt werden, bei der eine stabförmige Anordnung in Kombination mit einem aktiven Überwachungsmittel genutzt wird. In diesem Fall kann die Energieversorgung beispielsweise durch den Stab hindurch erfolgen, zum Beispiel durch eine elektrische Leitung.

Innerhalb des Sammelbehälters befindet sich während des Betriebs Flüssigkeit zwischen dem am Stab endseitig angeordneten Überwachungsmittel und der außerhalb des Sammelbehälters angeordneten Auswerteeinheit. Diese dämpft die Signalstärke zwischen dem Überwachungsmittel und der Auswerteeinheit, woraus auf den Flüssigkeitspegel bzw. die Menge an Flüssigkeit rückgeschlossen werden kann.

Wesentlich ist, dass die im Sammelbehälter befindliche Flüssigkeit auch unmittelbar durch die Öffnung, durch die die stabförmige Haltevorrichtung mit dem Überwachungsmittel eingeführt ist, abgeleitet werden kann. Somit ist kein zusätzlicher Sammelbehälter für eine indirekte Messung des Flüssigkeitspegels notwendig. Die stabförmige Haltevorrichtung mit dem Überwachungsmittel ist somit Teil einer Überwachungsanordnung, durch das die Flüssigkeit abgeleitet wird. In der gleichen Leitung befindet sich für diesen Zweck ein Ventil, das von der Auswerteeinheit, die widerum ihr Signal vom Überwachungsmittel bzw. vom RFID-Transponder erhält, geöffnet und geschlossen wird. Die im Sammelbehälter befindliche Flüssigkeit fließt also entlang der stabförmigen Haltevorrichtung durch die Öffnung aus dem Sammelbehälter heraus und passiert ein sich in dieser Leitung befindliches Ventil. Das Ventil kann dabei in unmittelbarer Nähe zum Sammelbehälter vorgesehen sein, denkbar ist aber auch eine weiter entfernte Anordnung.

Die sich insbesondere durch die Verwendung des RFID-Transponders ergebenden Vorteile und Möglichkeiten wurden bereits im Zusammenhang mit dem zuvor aufgezeigten erfindungsgemäßen Verfahren näher erläutert. Zur Vermeidung von Wiederholungen wird daher an dieser Stelle auf die vorherigen Ausführungen verwiesen, welche als weitergehende Erläuterungen der erfindungsgemäßen Überwachungsanordnung anzusehen sind. Dies gilt im Übrigen auch für die nachfolgend erläuterten vorteilhaften Ausgestaltungen der erfindungsgemäßen Überwachungsanordnung. Es ist vorgesehen, dass wenigstens ein Teil der sich in dem Sammelraum ansammelnden Flüssigkeit derart zwischen dem Überwachungsmittel und der Auswerteeinheit angeordnet ist, dass durch die Störung der Kommunikation zunehmender oder abnehmender Füllstand erfassbar ist. Mit anderen Worten geht die Erfindung hierbei von einer räumlichen Positionierung von Überwachungsmittel und Auswerteeinheit aus.
In Form eines bildhaften Vergleichs kann die erfindungsgemäße Ausgestaltung mit dem typischen Aufbau einer Lichtschranke verglichen werden, welche in ihrer Eigenart allerdings nicht zur Erfassung von transparenter Flüssigkeit, insbesondere von Wasser taugt. Anhand des Vergleichs mit einer Lichtschranke soll daher lediglich der grundsätzliche Aufbau der hier in Rede stehenden Anordnung verdeutlicht werden. So kann die Auswerteeinheit in diesem Vergleich als Lichtquelle und gleichzeitig als Empfänger für Licht angesehen werden. Demgegenüber dient das Überwachungsmittel als reflektierendes Element, welches das von der Auswerteeinheit ausgesandte Licht auf den Empfänger der Auswerteeinheit widerspiegelt. Als zumindest teilweise Unterbrechung für das Licht kann dann die in dem Sammelraum ansteigende Flüssigkeit angesehen werden.
Weiterhin sieht die Erfindung vor, dass das Überwachungsmittel entweder einen unmittelbaren Kontakt zu der Flüssigkeit aufweist oder aber außerhalb der Flüssigkeit angeordnet sein kann. Erfindungsgemäß ist das Überwachungsmittel innerhalb des Sammelraumes angeordnet, während es mit der außerhalb des Sammelraumes angeordneten Auswerteeinheit drahtlos korrespondiert. In einer nicht erfindungsgemäßen Ausführung können Überwachungsmittel und Auswerteeinheit auch gegenüberliegend angeordnet sein und zumindest einen Teil des Sammelraumes zwischen sich einschließen. In diesem Zusammenhang wird es als vorteilhaft angesehen, wenn zumindest der zwischen dem Überwachungsmittel und der Auswerteeinheit gelegene Teil des Sammelraumes aus einem nicht-metallischen Material gebildet ist. Hintergrund ist, dass insbesondere bei der Verwendung eines UHF-Transponders die elektromagnetischen Wellen von Metall stark reflektiert werden können. Hierdurch kann die Ausbreitung des Antennenfeldes negativ beeinflusst werden, so dass Messfehler auftreten können. Letztlich ist hier dem Fachmann die Wahl geeigneter Materialien in Kombination mit dem jeweiligen RFID-Transponder überlassen, welche sich von Anwendungsfall zu Anwendungsfall unterscheiden kann, so dass keine allgemeingültige Aussage getroffen werden kann.

Gleichwohl ist der Einsatz von metallischen Werkstoffen im Zusammenhang mit Druckgassystemen als bevorzugt anzusehen. Dies liegt im Wesentlichen an der mitunter höheren Festigkeit und der damit verbundenen besseren Widerstandsfähigkeit gegenüber höheren und insbesondere hohen Drücken. In diesem Zusammenhang wird es gemäß der vorliegenden Erfindung als vorteilhaft angesehen, wenn bei der ersten Inbetriebnahme der Überwachungsanordnung ein "Teach-In" erfolgt.

Teach-In meint in diesem Zusammenhang die Nutzung der programmtechnischen Intelligenz des RFID-Transponders, mit welcher der aus dem Einsatz eines metallischen Werkstoffs resultierende Signalhub bzw. die Signalstörung eliminiert werden kann. Auf diese Weise kann in vorteilhafter Weise dann die zumeist abschirmende Wirkung eines solchen metallischen Sammelraumes gegenüber weiterer Störsignale von außen genutzt werden. Grundsätzlich kann die Möglichkeit des Teach-In auch dafür genutzt werden, um beispielsweise eine Kompensation von Temperatur und/oder etwaigen Verschmutzungen vorzunehmen.

In diesem Zusammenhang wird in der erfindungsgemäßen Ausgestaltung der Überwachungsanordnung daher insgesamt ein weiterer Vorteil in der Unempfindlichkeit gegenüber etwaigen Verschmutzungen gesehen.

Weitere Ausgestaltungen des Verfahrens zur elektronischen Füllstandsüberwachung einer Flüssigkeit in einem Sammelraum oder der Überwachungsanordnung zur elektronischen Füllstandsüberwachung einer Flüssigkeit in einem Sammelraum können sich durch eine technisch sinnvolle Kombination einzelner oder mehrerer in der vorherigen Beschreibung aufgezeigter Merkmale sowie Maßnahmen ergeben und werden ausdrücklich im Rahmen der Erfindung mit beansprucht. Weitere Charakterisierungen und Spezifizierungen der Erfindung können sich insbesondere im Zusammenhang mit der nachfolgenden Figurenbeschreibung ergeben, welche ebenfalls als Teil der Erfindung angesehen und beansprucht werden.
Nachfolgend wird die Erfindung anhand von in den Zeichnungen dargestellten Ausführungsbeispielen näher erläutert. Es zeigen:
- Fig. 1: eine schematische Darstellung einer erfindungsähnlichen Überwachungsanordnung in ihrem grundsätzlichen Aufbau,
- Fig. 2: die Überwachungsanordnung aus Fig. 1 in einer alternativen Anordnung in selber Darstellungsweise sowie
- Fig. 3: die Überwachungsanordnung aus Fig. 2 in einer alternativen Ausgestaltung in selber Darstellungsweise,
- Fig. 4: eine Ausführungsvariante der Erfindung,
- Fig. 5: eine weitere Ausführungsvariante der Erfindung.

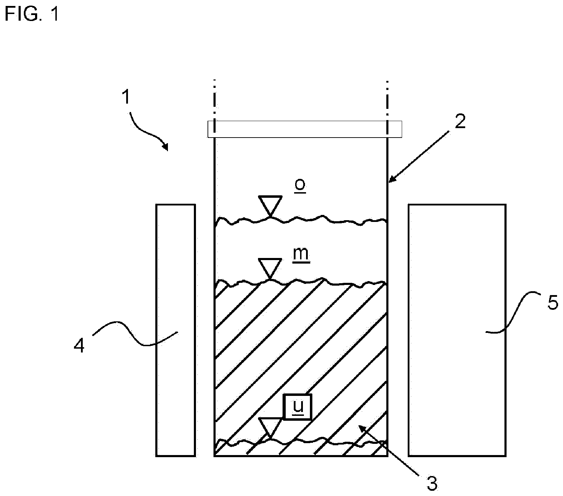

Aus Fig. 1 geht der grundsätzliche Aufbau einer erfindungsähnlichen Überwachungsanordnung 1 hervor. Wie zu erkennen, umfasst diese zunächst einen Sammelraum 2, welcher der Aufnahme von anfallender Flüssigkeit 3 dient, beispielsweise von Kondensat. Bei der Sammelraum 2 kann es sich beispielsweise um einen Teil eines nicht näher gezeigten Druckgassystems handeln. Alternativ hierzu kann es sich bei dem Sammelraum 2 auch um ein zusätzliches Bauteil handeln, welches in nicht näher dargestellter Weise fluidleitend mit einem Druckgassystem verbunden ist.

Weiterhin umfasst die Überwachungsanordnung 1 ein Überwachungsmittel 4 sowie eine Auswerteeinheit 5. Bei dem Erfassungsmittel 4 handelt es sich um einen RFID-Transponder. Das Überwachungsmittel 4 ist im Bereich des Sammelraumes 2 angeordnet; aber außerhalb des Sammelraumes 2 und somit außerhalb der Flüssigkeit 3. Auf diese Weise tritt das Überwachungsmittel 4 nicht direkt mit der Flüssigkeit 3 in Kontakt. Die Auswerteeinheit 5 ist dazu ausgebildet, um ein drahtlos übermitteltes Signal des Überwachungsmittels 4 zu empfangen.

Vorliegend ist zumindest ein Teil der sich in dem Sammelraum 2 ansammelnden Flüssigkeit 3 derart zwischen dem Überwachungsmittel 4 und der Auswerteeinheit 5 angeordnet, dass deren zwischen dem Überwachungsmittel 4 und der Auswerteeinheit 5 zunehmender oder abnehmender Füllstand der Flüssigkeit 3 erfassbar ist. Dabei ist der Pegel der Flüssigkeit vorliegend mit einem mittleren Füllstand m gezeigt, wobei dieser zwischen einem oberen Füllstand o und einem unteren Füllstand u schwanken kann.

In dieser Anordnung ist die Auswerteeinheit 5 in der Lage, ein nicht näher gezeigtes zumindest temporäres elektromagnetisches Feld zu erzeugen, welches in einem durch die Auswerteeinheit 5 registrierbaren Maße durch eine Rückmeldung des Überwachungsmittels 4 beeinflusst wird. Insbesondere durch die absorbierende Wirkung der Flüssigkeit 3 auf das elektromagnetische Feld kann so der jeweilige Füllstand m, o, u der Flüssigkeit 3 in dem Sammelraum 2 erfasst werden.

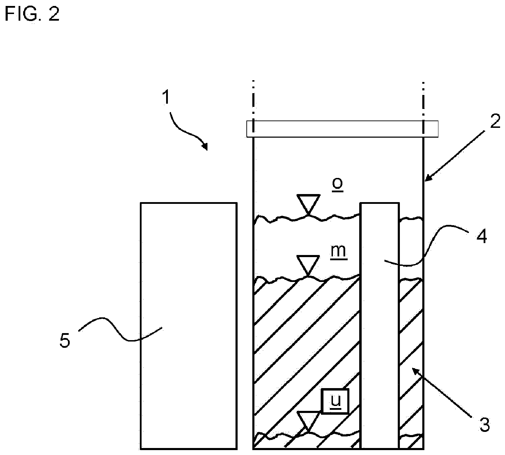

Fig. 2 zeigt eine alternative Anordnung des Überwachungsmittels 4. Dieses ist nun nicht mehr außerhalb des Sammelraumes 2 angeordnet, sondern innerhalb des Sammelraumes 2, so dass das Überwachungsmittel 4 nunmehr einen unmittelbaren Kontakt zu der Flüssigkeit 3 aufweist.

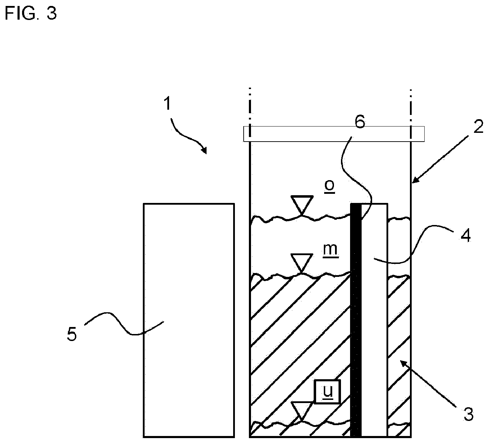

Fig. 3 verdeutlicht eine alternative, nicht erfindungsgemäße Ausgestaltung der Überwachungsanordnung 1. Hierbei ist das Überwachungsmittel 4 weiterhin innerhalb des Sammelraumes 2 angeordnet, wobei es mit einem Sensor 6 gekoppelt ist. Dabei ist der Sensor 6 ebenfalls innerhalb des Sammelraumes 2 angeordnet. Der Sensor 6 ist dazu ausgebildet, um einen Füllstand m, o, u der Flüssigkeit 3 innerhalb des Sammelraumes 2 konkret zu erfassen.

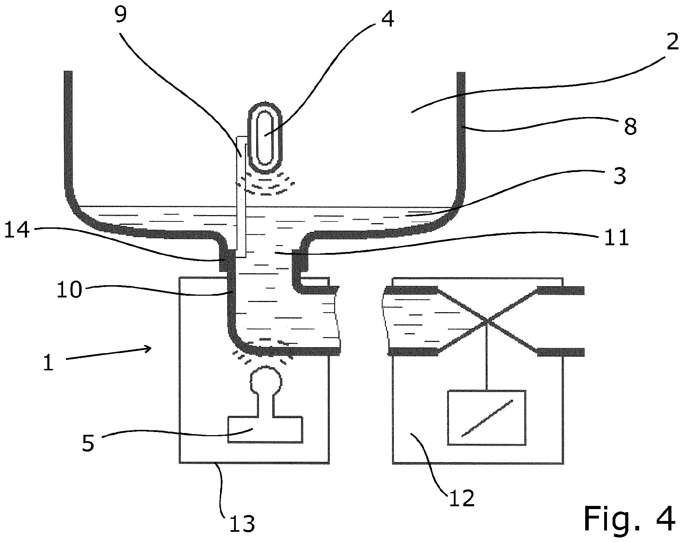

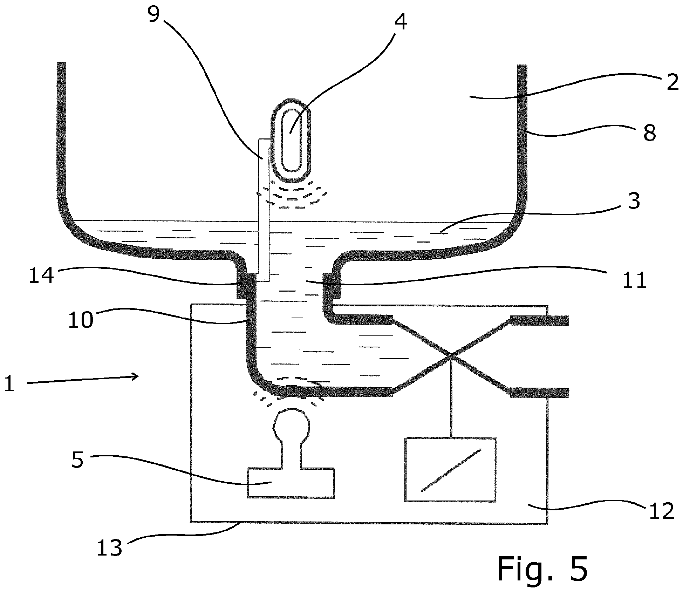

Die Figuren 4 und 5 verdeutlichen eine Ausführungsvariante der Erfindung. Erkennbar ist ein Sammelbehälter 8, in dem sich der Sammelraum 2 befindet. Innerhalb des Sammelraums hat sich Flüssigkeit 3 angesammelt. Das Überwachungsmittel 4 (vorzugsweise ein RFID-Transponder) ist an einem Stab 9 endseitig angeordnet. Der Stab 9 dient somit als Haltevorrichtung für das Überwachungsmittel 4.

Der Stab 9 ist in oder an einer Anschlussleitung 10 angeordnet, alternativ kann er auch integraler Bestandteil dieser sein. Die Anschlussleitung 10 ist wiederum an eine Öffnung 11 des Sammelbehälters 8 angeschlossen und dient der Ableitung der Flüssigkeit 3. Ebenfalls in Verbindung mit der Anschlussleitung 10 steht die Auswerteeinheit 5. Die Funkverbindung zwischen dem Überwachungsmittel und der Auswerteeinheit ist durch gestrichelte Linien dargestellt.

Weiterhin befindet sich im Verlauf der Anschlussleitung 10 ein steuerbares Ventil 12. Wird das Ventil 12 geöffnet, kann die Flüssigkeit 3 aus dem Sammelraum 2 durch die Anschlussleitung 10 abfließen. Das Ventil 12 wird von der Auswerteeinheit 5 gesteuert, diese wertet die vom Überwachungsmittel 4 empfangenen Signale aus und öffnet oder schließt das Ventil 12.

Erfindungsgemäß kann die Überwachungsanordnung 1 als zusammenhängendes Bauteil ausgeführt sein, das innerhalb eines Gehäuses 13 die Auswerteeinheit 5 aufweist und einen Abschnitt der Anschlussleitung 10 beinhaltet oder ausbildet. Wesentlich ist, dass die Überwachungsanordnung 1 den Stab 9 mit dem daran angeordneten Überwachungsmittel 4 beinhaltet. Die Überwachungsanordnung 1 ist dabei derart gestaltet, dass sie in die Öffnung 11 des Sammelbehälters 8 eingesetzt werden kann, wobei der Stab 9 mit der Überwachungsanordnung 1 durch die Öffnung 11 eingeführt wird. Zu diesem Zweck kann eine Gewindeverbindung zwischen der Öffnung 11 und der Überwachungsanordnung vorgesehen sein. Gezeigt ist ein an den Sammelbehälter 8 angeordneter Anschlussstutzen 14, vorzugsweise mit einem Innengewinde, an den die Überwachungsanordnung 1 anschraubbar ist. Alternativ ist auch eine Steckverbindung mit einer Dichtung und einer Überwurfmutter, über die die Anschlussleitung 10 über ein Außengewinde am Anschlussstutzen 14 befestigt wird, denkbar. In beiden Fällen ist eine Installation der Überwachungsanordnung 1 vor Ort schnell und einfach möglich.

Wie bereits ausgeführt, kann das zugehörige Ventil 12 extern im Verlauf der Anschlussleitung angeordnet sein (Fig. 4). Alternativ kann das Ventil 12, wie in Fig 5 gezeigt, als integraler Bestandteil der Überwachungsanordnung 1 ebenfalls im Gehäuse 13 angeordnet sein.

In allen Fällen wird die Signalstärke des Überwachungsmittels 4 durch die Flüssigkeit zumindest teilweise absorbiert, wobei die Auswerteeinheit 5 die Signalstärke bzw. die Störung der Signalstärke des Signals des Überwachungsmittels 4 erfasst.

### Bezugszeichen:

- 1 -: Überwachungsanordnung
- 2 -: Sammelraum von 1
- 3 -: Flüssigkeit in 2, insbesondere Kondensat
- 4 -: Überwachungsmittel von 1
- 5 -: Auswerteeinheit von 1
- 6 -: Sensor von 4
- 8 -: Sammelbehälter
- 9 -: Stab
- 10-: Anschlussleitung
- 11 -: Öffnung
- 12-: Ventil
- 13-: Gehäuse
- 14-: Anschlussstutzen

- m -: mittlerer Füllstand von 3 in 2
- o -: oberer Füllstand von 3 in 2
- u -: unterer Füllstand von 3 in 2

## Patentansprüche

1. Verfahren zur elektronischen Überwachung des Füllstandes (m, o, u) eines Kondensats (3) in einem Sammelraum (2) eines Druckgassystems, wobei ein Überwachungsmittel (4) mit einer Auswerteeinheit (5) zur Erfassung des Füllstandes (m, o, u) korrespondiert, und wobei als Überwachungsmittel (4) ein RFID-Transponder verwendet wird oder das Überwachungsmittel (4) einen RFID-Transponder umfasst, wobei die Auswerteeinheit (5) ein zumindest temporäres elektromagnetisches Feld erzeugt und in einem durch die Auswerteeinheit (5) registrierbaren Maße durch eine Rückmeldung des Überwachungsmittels (4) beeinflusst wird, wobei durch die absorbierende Wirkung der Flüssigkeit (3) auf das elektromagnetische Feld der jeweilige Füllstand (m, o, u) der Flüssigkeit (3) in dem Sammelraum (2) erfasst wird und wobei das Überwachungsmittel (4) innerhalb des Sammelraums (2) angeordnet ist, wobei
- die Auswerteeinheit (5) außerhalb des Sammelraums (2) angeordnet ist,
- der RFID Transponder an einem Stab (9), der durch eine Öffnung (11) in den Sammelraum (8) hineinragt, angeordnet ist,
- das Überwachungsmittel (4) und die Auswerteeinheit (5) Teil einer elektronischen Überwachungsanordnung (1) sind, welche mit einer mit dem Sammelraum (2) fluidleitend verbundenen Ventilanordnung gekoppelt ist, wobei beim Erreichen oder Überschreiten eines oberen Füllstandes (o) die Ventilanordnung geöffnet wird, um zumindest einen Teil der Flüssigkeit (3) aus dem Sammelraum (2) abzuleiten.

2. Verfahren nach Anspruch 1, **gekennzeichnet durch** eine Anordnung des Überwachungsmittel (4) und der Auswerteeinheit (5) zueinander derart, dass das elektromagnetische Feld durch den zwischen dem Überwachungsmittel (4) und der Auswerteeinheit (5) ansteigenden Füllstand (m, o, u) im gleichen Maße zumindest teilweise absorbiert wird und die Auswerteeinheit (5) die Signalstärke des Signals des Überwachungsmittels (4) erfasst.

3. Verfahren nach Anspruch 1 oder 2, **dadurch gekennzeichnet, dass** das Überwachungsmittel (4) mit einem Sensor (6) gekoppelt ist, welcher dazu ausgebildet ist, um einen Füllstand (m, o, u) der Flüssigkeit (3) zu erfassen, wobei das elektromagnetische Feld in Abhängigkeit von dem durch den Sensor (6) erfassten Füllstand (m, o, u) derart verändert wird, dass der erfasste Füllstand (m, o, u) an die Auswerteeinheit (5) übermittelt wird.

4. Verfahren nach einem der Ansprüche 1 bis 3, **dadurch gekennzeichnet, dass** das Überwachungsmittel (4) und die Auswerteeinheit (5) Teil einer elektronischen Überwachungsanordnung (1) sind, welche mit einer mit dem Sammelraum (2) fluidleitend verbundenen Ventilanordnung gekoppelt ist, wobei zum geregelten Ableiten der Flüssigkeit (3) aus dem Sammelraum (2) die Ventilanordnung geöffnet wird und beim Erreichen oder Unterschreiten eines unteren Füllstandes (u) die Ventilanordnung geschlossen wird.

5. Verfahren nach einem der Ansprüche 1 bis 4, **gekennzeichnet durch** mindestens zwei zueinander beabstandete Überwachungsmittel (4), wobei beim Ableiten oder Ansammeln der Flüssigkeit (3) aus oder in dem Sammelraum (2) die Zeit zwischen dem Passieren der Überwachungsmittel (4) durch den abnehmenden oder zunehmenden Füllstand (m, o, u) gemessen wird, um das Abströmverhalten der Flüssigkeit (3) zu messen.

6. Kondensatableiter mit einer Überwachungsanordnung (1) zur elektronischen Überwachung des Füllstandes (m, o, u) eines Kondensats (3) in einem Sammelraum (2), insbesondere zur Durchführung des Verfahrens nach einem der vorhergehenden Ansprüche, umfassend ein Überwachungsmittel (4) sowie eine Auswerteeinheit (5), wobei die Auswerteeinheit (5) dazu ausgebildet ist, ein zumindest temporäres elektromagnetisches Feld zu erzeugen und ein übermitteltes Signal des Überwachungsmittels (4) zu empfangen, wobei das Überwachungsmittel (4) ein RFID-Transponder ist oder einen solchen umfasst, wobei das Überwachungsmittel (4) innerhalb des Sammelraums (2) angeordnet ist, wobei die Auswerteeinheit (5) derart ausgeführt ist, dass sie die Signalstärke des Signals des Überwachungsmittels (4) erfasst und wobei durch die absorbierende Wirkung der Flüssigkeit (3) auf das elektromagnetische Feld der jeweilige Füllstand (m, o, u) der Flüssigkeit (3) in dem Sammelraum (2) erfasst wird, wobei,
- die Auswerteeinheit (5) außerhalb des Sammelraums (2) angeordnet ist,
- der RFID Transponder an einem Stab (9), der durch eine Öffnung (11) in den Sammelraum (8) hineinragt, angeordnet ist,
- das Überwachungsmittel (4) und die Auswerteeinheit (5) Teil einer elektronischen Überwachungsanordnung (1) sind, welche dazu ausgebildet ist, mit einer mit dem Sammelraum (2) fluidleitend verbundenen Ventilanordnung gekoppelt zu werden und beim Erreichen oder Überschreiten eines oberen Füllstandes (o) die Ventilanordnung zu öffnen, um zumindest einen Teil der Flüssigkeit (3) aus dem Sammelraum (2) abzuleiten.

7. Kondensatableiter nach Anspruch 6, **dadurch gekennzeichnet, dass** wenigstens ein Teil der sich in dem Sammelraum (2) ansammelnden Flüssigkeit (3) derart zwischen dem Überwachungsmittel (4) und der Auswerteeinheit (5) angeordnet ist, dass deren zwischen dem Überwachungsmittel (4) und der Auswerteeinheit (5) zunehmender oder abnehmender Füllstand (m, o, u) erfassbar ist.

8. Kondensatableiter nach Anspruch 6 oder 7, **dadurch gekennzeichnet, dass** das Überwachungsmittel (4) entweder einen unmittelbaren Kontakt zu der Flüssigkeit (3) aufweist oder außerhalb der Flüssigkeit (3) angeordnet ist.

9. Kondensatableiter nach einem der Ansprüche 6 bis 8, **dadurch gekennzeichnet, dass** sich an die Öffnung (11) eine Anschlussleitung (10) anschließt, über die im Sammelraum (2) angesammelte Flüssigkeit (3) ableitbar ist.

10. Kondensatableiter nach Anspruch 9, **dadurch gekennzeichnet, dass** im Verlauf der Anschlussleitung (10) ein Ventil (12) angeordnet ist, das über die Auswerteeinheit (5) steuerbar ist.

11. Kondensatableiter nach einem der Anspruch 6 bis 10, **dadurch gekennzeichnet, dass** die Überwachungsanordnung (1) als zusammenhängendes Bauteil ausgeführt ist, das an die Öffnung (11) anschließbar ist und nebem dem Überwachungsmittel (4) und dem Stab (9) auch ein Gehäuse (13) aufweist, in dem die Auswerteinheit (4) und ein Abschnitt der Anschlussleitung (10) angeordnet sind.

12. Kondensatableiter nach Anspruch 11, **dadurch gekennzeichnet, dass** auch das Ventil (12) innerhalb des Gehäuses (13) angeordnet ist.

## Claims

1. A method for electronically monitoring the filling level (m, o, u) of a condensate (3) in a collecting chamber (2) of a pressurized gas system, wherein a monitoring means (4) corresponds with an evaluation unit (5) for detecting the filling level (m, o, u), and wherein an RFID transponder is used as the monitoring means (4) or the monitoring means (4) comprises an RFID transponder, wherein the evaluation unit (5) generates an at least temporary electromagnetic field, and is influenced by a feedback of the monitoring means (4) to a degree that can be registered by the evaluation unit (5), wherein the respective filling level (m, o, u) of the liquid (3) in the collecting chamber (2) is detected by the absorbing effect of the liquid (3) on the electromagnetic field, and wherein the monitoring means (4) is disposed within the collecting chamber (2), wherein
- the evaluation unit (5) is disposed outside the collecting chamber (2),
- the RFID transponder is disposed on a rod (9), which protrudes through an opening (11) into the collecting chamber (8),
- the monitoring means (4) and the evaluation unit (5) are part of an electronic monitoring assembly (1), which is coupled to a valve assembly connected in a fluid-conducting manner to the collecting chamber (2), wherein the valve assembly is opened upon reaching or exceeding an upper filling level (o) to drain at least a part of the liquid (3) from the collecting chamber (2).

2. The method according to claim 1, **characterized by** an arrangement of the monitoring means (4) and the evaluation unit (5) relative to one another in such a manner that the electromagnetic field is absorbed to the same degree at least partially by the filling level (m, o, u) which is increasing between the monitoring means (4) and the evaluation unit (5), and the evaluation unit (5) detects the signal strength of the signal of the monitoring means (4).

3. The method according to claim 1 or 2, **characterized in that** the monitoring means (4) is coupled to a sensor (6), which is configured for detecting a filling level (m, o, u) of the liquid (3), wherein the electromagnetic field is changed in accordance with the filling level (m, o, u) detected by the sensor (6) such that the detected filling level (m, o, u) is transmitted to the evaluation unit (5).

4. The method according to any one of the claims 1 to 3, **characterized in that** the monitoring means (4) and the evaluation unit (5) are part of an electronic monitoring assembly (1), which is coupled to a valve assembly connected in a fluid-conducting manner to the collecting chamber (2), wherein the valve assembly is opened for the regulated drainage of the liquid (3) from the collecting chamber (2), and upon reaching or falling below a lower filling (u) level, the valve assembly is closed.

5. The method according to any one of the claims 1 to 4, **characterized by** at least two monitoring means (4) spaced apart from each other, wherein, when draining or collecting the liquid (3) out of or in the collecting chamber (2), the time between the passage of the monitoring means (4) by the decreasing or increasing filling level (m, o, u) is measured to measure the flow-off behavior of the liquid (3).

6. A condensate draining means with a monitoring assembly (1) for electronically monitoring the filling level (m, o, u) of a liquid (3) in a collecting chamber (2), in particular for carrying out the method according to any one of the preceding claims, comprising a monitoring means (4) and an evaluation unit (5), wherein the evaluation unit (5) is configured to generate an at least temporary electromagnetic field and receive a transmitted signal of the monitoring means (4), wherein the monitoring means (4) is or includes an RFID transponder, wherein the monitoring means (4) is disposed within the collecting chamber (2), wherein the evaluation unit (5) is configured such that it detects the signal strength of the signal of the monitoring means (4), and wherein the respective filling level (m, o, u) of the liquid (3) in the collecting chamber (2) is detected by the absorbing effect of the liquid (3) on the electromagnetic field, wherein
- the evaluation unit (5) is disposed outside the collecting chamber (2),
- the RFID transponder is disposed on a rod (9), which protrudes through an opening (11) into the collecting chamber (8),
- the monitoring means (4) and the evaluation unit (5) are part of an electronic monitoring assembly (1), which is configured to be coupled to a valve assembly connected in a fluid-conducting manner to the collecting chamber (2) and to open the valve assembly upon reaching or exceeding an upper filling level (o) to drain at least a part of the liquid (3) from the collecting chamber (2).

7. The condensate draining means according to claim 6, **characterized in that** at least a part of the liquid (3) collecting in the collecting chamber (2) is disposed between the monitoring means (4) and the evaluation unit (5) such that the filling level (m, o, u) thereof that increases or decreases between the monitoring means (4) and the evaluation unit (5) is detectable.

8. The condensate draining means according to claim 6 or 7, **characterized in that** the monitoring means (4) either has a direct contact with the liquid (3) or is disposed outside the liquid (3).

9. The condensate draining means according to any one of the claims 6 to 8, **characterized in that** a connection line (10), via which the liquid (3) collected in the collecting chamber (2) can be drained, is adjacent to the opening (11).

10. The condensate draining means according to claim 9, **characterized in that** a valve (12), which can be controlled via the evaluation unit (5), is disposed in the course of the connection line (10).

11. The condensate draining means according to any one of the claims 6 to 10, **characterized in that** the monitoring assembly (1) is configured as a coherent component, which can be connected to the opening (11) and, in addition to the monitoring means (4) and the rod (9), also includes a housing (13), in which the evaluation unit (4) and a section of the connection line (10) are disposed.

12. The condensate draining means according to claim 11, **characterized in that** the valve (12) is also arranged inside the housing (13).

## Revendications

1. Procédé de surveillance électronique du niveau de remplissage (m, o, u) d'un condensat (3) dans un compartiment collecteur (2) d'un système de gaz comprimé, dans lequel un moyen de surveillance (4) correspond avec une unité d'évaluation (5) servant à détecter le niveau de remplissage (m, o, u), et dans lequel on utilise en tant que moyen de surveillance (4) un transpondeur RFID ou le moyen de surveillance (4) comprend un transpondeur RFID, dans lequel l'unité d'évaluation (5) génère un champ électromagnétique au moins temporaire et est influencée par un retour d'information du moyen de surveillance (4) dans une mesure enregistrable par l'unité d'évaluation (5), dans lequel le niveau de remplissage (m, o, u) respectif du liquide (3) dans le compartiment collecteur (2) est détecté par l'effet absorbant du liquide (3) sur le champ électromagnétique, et dans lequel ledit moyen de surveillance (4) est disposé à l'intérieur du compartiment collecteur (2), dans lequel
- l'unité d'évaluation (5) est disposée à l'extérieur du compartiment collecteur (2),
- le transpondeur RFID est disposé sur une barre (9) qui avance dans le compartiment collecteur (2) à travers une ouverture (11),
- le moyen de surveillance (4) et l'unité d'évaluation (5) font partie d'un ensemble de surveillance électronique (1) qui est couplé à un ensemble de soupape relié fluidiquement au compartiment collecteur (2), dans lequel, lorsqu'un niveau de remplissage supérieur (o) est atteint ou est dépassé, ledit ensemble de soupape est ouvert afin de faire évacuer au moins une partie du liquide (3) dudit compartiment collecteur (2).

2. Procédé selon la revendication 1, **caractérisé par** une disposition du moyen de surveillance (4) et de l'unité d'évaluation (5) l'un par rapport à l'autre de telle sorte que le champ électromagnétique est absorbé au moins en partie dans la même mesure par le niveau de remplissage (m, o, u) augmentant entre le moyen de surveillance (4) et l'unité d'évaluation (5), et que l'unité d'évaluation (5) détecte l'intensité de signal du signal du moyen de surveillance (4).

3. Procédé selon la revendication 1 ou 2, **caractérisé par le fait que** le moyen de surveillance (4) est couplé à un capteur (6) qui est configuré pour détecter un niveau de remplissage (m, o, u) du liquide (3), dans lequel le champ électromagnétique est modifié en fonction du niveau de remplissage (m, o, u) détecté par le capteur (6), de telle manière que le niveau de remplissage (m, o, u) détecté est transmis à l'unité d'évaluation (5).

4. Procédé selon l'une quelconque des revendications 1 à 3, **caractérisé par le fait que** le moyen de surveillance (4) et l'unité d'évaluation (5) font partie d'un ensemble de surveillance électronique (1) qui est couplé à un ensemble de soupape relié fluidiquement au compartiment collecteur (2), dans lequel, pour faire évacuer d'une manière réglée le liquide (3) du compartiment collecteur (2), ledit ensemble de soupape est ouvert et, lorsqu'un niveau de remplissage inférieur (u) est atteint ou n'est pas atteint, l'ensemble de soupape est fermé.

5. Procédé selon l'une quelconque des revendications 1 à 4, **caractérisé par** au moins deux moyens de surveillance (4) espacés les uns des autres, dans lequel, lorsque le liquide (3) est évacué du ou collecté dans le compartiment collecteur (2), le temps entre le passage des moyens de surveillance (4) est mesuré par le niveau de remplissage (m, o, u) diminuant ou augmentant afin de mesurer le comportement d'écoulement du liquide (3).

6. Purgeur de vapeur comprenant un ensemble de surveillance (1) servant à la surveillance électronique du niveau de remplissage (m, o, u) d'un condensat (3) dans un compartiment collecteur (2), en particulier pour la mise en oeuvre du procédé selon l'une quelconque des revendications précédentes, comprenant un moyen de surveillance (4) ainsi qu'une unité d'évaluation (5), dans lequel ladite unité d'évaluation (5) est réalisée pour générer un champ électromagnétique au moins temporaire et pour recevoir un signal transmis du moyen de surveillance (4), dans lequel le moyen de surveillance (4) est un transpondeur RFID ou comprend un tel transpondeur RFID, dans lequel le moyen de surveillance (4) est disposé à l'intérieur du compartiment collecteur (2), dans lequel l'unité d'évaluation (5) est réalisée de telle manière qu'elle détecte l'intensité de signal du signal du moyen de surveillance (4), et dans lequel le niveau de remplissage (m, o, u) respectif du liquide (3) dans le compartiment collecteur (2) est détecté par l'effet absorbant du liquide (3) sur le champ électromagnétique, dans lequel
- l'unité d'évaluation (5) est disposée à l'extérieur du compartiment collecteur (2),
- le transpondeur RFID est disposé sur une barre (9) qui avance dans le compartiment collecteur (2) à travers une ouverture (11),
- le moyen de surveillance (4) et l'unité d'évaluation (5) font partie d'un ensemble de surveillance électronique (1) qui est configuré pour être couplé à un ensemble de soupape relié fluidiquement au compartiment collecteur (2) et pour ouvrir lorsqu'un niveau de remplissage supérieur (o) est atteint ou est dépassé afin de faire évacuer au moins une partie du liquide (3) dudit compartiment collecteur (2).

7. Purgeur de vapeur selon la revendication 6, **caractérisé par le fait qu'**au moins une partie du liquide (3) s'accumulant dans le compartiment collecteur (2) est disposée entre le moyen de surveillance (4) et l'unité d'évaluation (5) de telle manière que son niveau de remplissage (m, o, u) augmentant ou diminuant entre le moyen de surveillance (4) et l'unité d'évaluation (5) est détectable.

8. Purgeur de vapeur selon la revendication 6 ou 7, **caractérisé par le fait que** le moyen de surveillance (4) présente soit un contact immédiat avec le liquide (3) soit est disposé à l'extérieur du liquide (3).

9. Purgeur de vapeur selon l'une quelconque des revendications 6 à 8, **caractérisé par le fait qu'**une conduite de raccordement (10) est raccordée à l'ouverture (11), par laquelle on peut faire évacuer du liquide (3) qui s'est accumulé dans le compartiment collecteur (2).

10. Purgeur de vapeur selon la revendication 9, **caractérisé par le fait qu'**une soupape (12) qui est commandable par l'unité d'évaluation (5) est disposée dans le tracé de ladite conduite de raccordement (10).

11. Purgeur de vapeur selon l'une quelconque des revendications 6 à 10, **caractérisé par le fait que** ledit ensemble de surveillance (1) est réalisé en tant que composant continu qui peut être raccordé à l'ouverture (11) et présente outre le moyen de surveillance (4) et la barre (9) également un boîtier (13) à l'intérieur duquel sont disposées l'unité d'évaluation (4) et une portion de la conduite de raccordement (10).

12. Purgeur de vapeur selon la revendication 11, **caractérisé par le fait que** la soupape (12) est disposée, elle aussi, à l'intérieur dudit boîtier (13).
